# EUROPEAN PATENT APPLICATION

(11) **EP 4 693 641 A1**
(43) Date of publication of application: **11.02.2026**
(21) Application number: 24779717.8
(22) Date of filing: 19.03.2024
(51) Int. Cl.: H01M 50/184, H01M 10/04, H01M 10/0587, H01M 50/107, H01M 50/152, H01M 50/186

(54) **CYLINDRICAL BATTERY AND METHOD FOR MANUFACTURING CYLINDRICAL BATTERY**

(30) Priority: 29.03.2023 JP 2023053430
(71) Applicant: Panasonic Energy Co., Ltd., Osaka 570-8511 (JP)
(72) Inventor: ADACHI, Soh, Osaka 570-8511 (JP)
(74) Representative: Eisenführ Speiser
(86) International application number: PCT/JP2024/010696
(87) International publication number: WO 2024/203592

(57) **Abstract**

This cylindrical battery includes an electrode body, an exterior can (20), and a sealing body (19) swaged and fixed to the opening of the exterior can (20) via a gasket (24). The exterior can (20) has: a tip bent part (30) bent so as to extend inward in the radial direction in an opening adjacent to the gasket (24); and a tip cylindrical part (31) extending in the axial direction. The gasket (24) has a non-continuous part (48) that can be separated in the axial direction at an opposing part (45) that faces the radially inner side of the tip cylindrical part (31).

## Description

### TECHNICAL FIELD

The present disclosure relates to a cylindrical battery and a method for manufacturing a cylindrical battery.

### BACKGROUND ART

Conventionally, configurations of cylindrical batteries comprising an electrode assembly, a bottomed cylindrical outer housing can that houses the electrode assembly, and a sealing assembly that seals an opening portion of the outer housing can have been known. Patent Literature 1 describes a cylindrical battery in which a cap (sealing assembly) is crimped and fixed to the opening portion of the outer housing can through a gasket.

### CITATION LIST

### PATENT LITERATURE

PATENT LITERATURE 1: Japanese Unexamined Patent Application Publication No. Hei 11-307067

### SUMMARY

In the configuration described in Patent Literature 1, in order to crimp and fix the sealing assembly to the opening portion of the outer housing can through the gasket, the gasket is arranged inside a tip portion of the outer housing can while the tip portion is stretched in an axial direction, and the tip portion of the outer housing can is bent inward in a radial direction. In addition, between a neck portion (grooved portion) provided in an intermediate portion of the outer housing can so as to project radially inward and the tip portion of the outer housing can, a force is generated in a direction of facing each other, and the tip portion of the outer housing can is further deformed to compress the gasket. During this compression, outward tensile stress is generated at a corner portion of the outer housing can that is adjacent to the tip portion of the outer housing can, and a large stress is also applied from the gasket that is compressed inward to the corner portion, which causes concentration of stress. As a result, when the battery is used in severe conditions, damage may occur in the corner portion.

Accordingly, it is an advantage of the present disclosure to provide a cylindrical battery and a method for manufacturing a cylindrical battery that can reduce concentration of stress at the corner portion of the outer housing can when the gasket is compressed by the tip portion of the outer housing can.

A cylindrical battery according to the present disclosure comprises: an electrode assembly having a positive electrode and a negative electrode wound through a separator; a bottomed cylindrical outer housing can that houses the electrode assembly; a sealing assembly that is crimped and fixed to an opening portion of the outer housing can through a gasket, wherein the outer housing can includes a tip bent portion that is bent so as to extend inward in a radial direction and a tip cylinder portion extending in an axial direction in an opening portion adjacent to the gasket, and the gasket has a non-continuous portion that is separable in the axial direction in a facing portion that faces a radially inner side of the tip cylinder portion.

A method for manufacturing a cylindrical battery according to the present disclosure is a method for manufacturing a cylindrical battery including an electrode assembly having a positive electrode and a negative electrode wound through a separator, a bottomed cylindrical outer housing can that houses the electrode assembly, and a sealing assembly that is crimped and fixed to an opening portion of the outer housing can through a gasket, the method comprising: arranging a gasket adjacent to inside of the opening portion of the outer housing can and bending a tip portion of the outer housing can greater than or equal to 90 degrees from a state of extending in an axial direction to a state of facing radially inward to form a tip bent portion and a tip cylinder portion that is provided on a bottom portion side in relation to the tip bent portion and that extends in the axial direction; and compressing the gasket in the axial direction through the tip bent portion from a state where the gasket is separated in the axial direction through a gap in a facing portion facing a radially inner side of the tip cylinder portion.

According to the cylindrical battery and the method for manufacturing a cylindrical battery, it is possible to reduce stress concentration at the corner portion of the outer housing can when the gasket is compressed by the tip portion of the outer housing can.

### BRIEF DESCRIPTION OF DRAWING

FIG. 1 is an axial sectional view of a cylindrical battery according to one embodiment of the present disclosure.
FIG. 2 is an enlarged sectional view of a circumferential portion of a gasket before assembling to the cylindrical battery in FIG. 1.
FIG. 3 is an enlarged sectional view corresponding to a portion A in FIG. 1 to show a method for bending a tip portion of the outer housing can and further compressing the gasket in the axial direction after the gasket is assembled to the outer housing can of the cylindrical battery in FIG. 1.
FIG. 4 is an enlarged sectional view corresponding to the portion A in FIG. 1 to show the occurrence of damage in an outer housing can of a cylindrical battery of a comparative example, when the cylindrical battery is used under severe conditions after a tip portion of the outer housing can is bent and a gasket is further compressed in the axial direction after the gasket is assembled to the outer housing can of the cylindrical battery.
FIG. 5 is a view corresponding to FIG. 3 in a cylindrical battery in another example of the embodiment.

### DESCRIPTION OF EMBODIMENTS

Hereinafter, an embodiment of a cylindrical battery according to the present disclosure will be described in detail with reference to the drawings. Here, the cylindrical battery of the present disclosure may be a primary battery or a secondary battery. The cylindrical battery may also be a battery using an aqueous electrolyte or a battery using a non-aqueous electrolyte. As a cylindrical battery 10 as one embodiment, a non-aqueous electrolyte secondary battery (lithium-ion battery) using a non-aqueous electrolyte is illustrated below, though the cylindrical battery of the present disclosure is not limited thereto, and the electrolyte may be an aqueous electrolyte.

It is assumed from the beginning that a new embodiment is constructed by appropriately combining characteristic portions of the embodiment or modifications as will be described below. In the embodiment below, like component members are designated by like reference signs to omit redundant explanation. The plurality of drawings also include schematic drawings, and throughout the different drawings, dimensional ratios, such as length, width, and height, do not necessarily match. In this specification, the cylindrical battery 10 on the side of a sealing assembly 19 in an axial direction (height direction) is defined as "upper side", and an outer housing can 20 on the side of a bottom portion 20a in the axial direction is defined as "lower side". Moreover, among the component members described below, those not included in an independent claim representing the highest-level concept are optional component members and are not essential component members. The present disclosure is also not limited to the embodiment and its modifications disclosed, and various improvements and changes are possible without departing from the scope of the Claims of the present invention and any equivalents thereof.

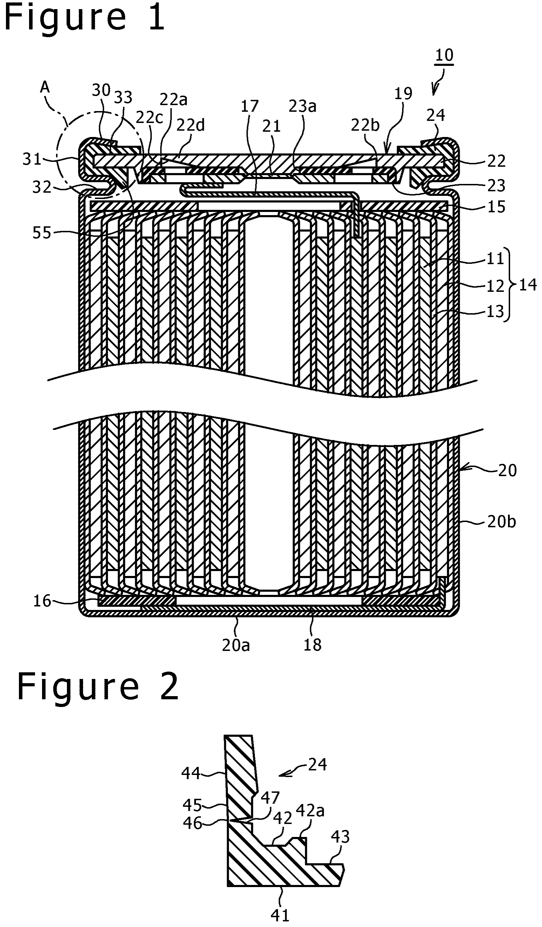

FIG. 1 is an axial sectional view of the cylindrical battery 10 according to one embodiment of the present disclosure. As shown in FIG. 1, the cylindrical battery 10 comprises an electrode assembly 14, a non-aqueous electrolyte, the bottomed cylindrical outer housing can 20 that houses the electrode assembly 14 and the non-aqueous electrolyte, and the sealing assembly 19 that seals the opening of the outer housing can 20. The electrode assembly 14 includes a positive electrode 11, a negative electrode 12, and separators 13 interposed between the positive electrode 11 and the negative electrode 12. The electrode assembly 14 has a winding structure in which the positive electrode 11 and the negative electrode 12 are wound through the separators 13. The outer housing can 20 is a bottomed tubular container having the bottom portion 20a and a tubular portion 20b.

The non-aqueous electrolyte contains, for example, non-aqueous solvent and electrolyte salt solved in the non-aqueous solvent. As the non-aqueous solvent, there may be used, for example, esters, ethers, nitriles, amides, and mixed solvent of two or more of the group consisting of these. The non-aqueous solvents may contain halogen substitution products in which at least a portion of hydrogen in these solvents is substituted with halogen atoms such as fluorine. The non-aqueous electrolyte is not limited to liquid electrolyte, and may be solid electrolyte using gel like polymers or the like. As the electrolyte salt, lithium salt such as LiPF₆ is used.

The electrode assembly 14 has the long-shaped positive electrode 11, the long-shaped negative electrode 12, and two long-shaped separators 13. The electrode assembly 14 also has a positive electrode lead 17 joined to the positive electrode 11 and a negative electrode lead 18 joined to the negative electrode 12 as electrode leads. In order to suppress lithium deposition, the negative electrode 12 is formed with a dimension slightly larger than the positive electrode 11. The two separators 13 are formed with a dimension that is at least slightly larger than the positive electrode 11 and are arranged, for example, to hold the positive electrode 11 therebetween.

The positive electrode 11 has a positive electrode core and a positive electrode mixture layer formed on both the surfaces of the positive electrode core. As the positive electrode core, there may be used a foil made of metal that is stable in a potential range of the positive electrode 11, such as aluminum and aluminum alloy, a film with the metal arranged on its surface layer, or the like. The positive electrode mixture layer contains a positive electrode active material, a conductive agent such as acetylene black, and a binding agent made of polyvinylidene fluoride (PVDF) or the like. The positive electrode 11 can be fabricated by, for example, coating the positive electrode core with positive electrode mixture slurry containing a positive electrode active material, a conductive agent, a binding agent or the like, drying the coating, and then compressing the coating to form a positive electrode mixture layer on both the surfaces of the positive electrode core.

As the positive electrode active material, lithium-transition metal composite oxides are used, for example. Examples of metal elements contained in the lithium-containing metal composite oxides may include Ni, Co, Mn, Al, B, Mg, Ti, V, Cr, Fe, Cu, Zn, Ga, Sr, Zr, Nb, In, Sn, Ta, and W. One suitable example of the lithium-containing metal composite oxides is lithium metal composite oxides containing at least one of the group consisting of Ni, Co, and Mn. Specific examples thereof may include composite oxides containing Ni, Co and MN, and composite oxides containing Ni, Co and Al.

The negative electrode 12 has a negative electrode core and a negative electrode mixture layer formed on both the surfaces of the negative electrode core. As the negative electrode core, there may be used a foil made of metal that is stable in a potential range of the negative electrode 12, such as copper or copper alloy, a film with the metal arranged on its surface layer, or the like. The negative electrode mixture layer contains a negative electrode active material and a binding agent such as styrene-butadiene rubber (SBR). The negative electrode 12 can be fabricated by, for example, coating the negative electrode core with negative electrode mixture slurry containing a negative electrode active material, a binding agent, or the like, drying the coating, and then compressing the coating to form a negative electrode mixture layer on both the surfaces of the negative electrode core.

As the negative electrode active material, there may be used, for example, natural graphite such as flake graphite, massive graphite, and earthy graphite, and artificial graphite such as massive artificial graphite, and graphitized mesophase carbon microbeads. As the negative electrode active material, there may be used metal that alloys with lithium such as Si and Sn, alloy containing the metal, and compounds containing the metal, and these may be used together with graphite. One suitable example of such an active material is a Si-containing material in which Si particles are dispersed in a silicate phase, such as an SiO₂ phase or a lithium silicate phase, or in an amorphous carbon phase.

Insulating plates 15 and 16 are arranged above and below the electrode assembly 14, respectively. In the example shown in FIG. 1, the positive electrode lead 17 attached to the positive electrode 11 extends toward the sealing assembly 19 through a through-hole of the insulating plate 15, and the negative electrode lead 18 attached to the negative electrode 12 extends toward the bottom portion 20a of the outer housing can 20 along the outside of the insulating plate 16. The positive electrode lead 17 is connected by welding or the like to an inner surface of the sealing assembly 19 that faces the inside of the outer housing can 20, so that the sealing assembly 19 serves as a positive electrode terminal. The negative electrode lead 18 is connected by welding or the like to an inner surface of the bottom portion 20a of the outer housing can 20, so that the outer housing can 20 serves as a negative electrode terminal.

Between the outer housing can 20 and the sealing assembly 19, a gasket 24 is provided to secure the sealability inside the battery and the insulation performance between the outer housing can 20 and the sealing assembly 19. The tubular portion 20b includes a tip bent portion 30 that is bent so as to extend radially inward over the entire circumference, and a tip tubular portion 31 that is provided on the side of the bottom portion 20a in the axial direction of the tip bent portion 30 and that extends in the axial direction. The tubular portion 20b also includes an annular grooved portion 32 that is provided on the side of the bottom portion 20a in the axial direction of the tip tubular portion 31. The grooved portion 32 is a portion of the outer housing can 20 that is on the side of the bottom portion 20a of the tip tubular portion 31 of the tubular portion 20b, the portion projecting toward the radially inner side over the entire circumference. The grooved portion 32 is formed by recessing part of the tubular portion 20b inward in the radial direction by spinning or other processing, for example.

The tip bent portion 30 is formed so as to extend inward in the radial direction when an upper end portion of the tubular portion 20b is bent radially inward and crimped to a circumferential edge portion 33 of the sealing assembly 19. The sealing assembly 19 is held between the tip bent portion 30 and the grooved portion 32 through the gasket 24 and fixed to the outer housing can 20 by the crimping.

The sealing assembly 19 is a disc-shaped member comprising a current cutoff mechanism. The sealing assembly 19 has a structure formed by stacking, in order from the side of the electrode assembly 14, an internal terminal plate 21, an insulating plate 23, and a rupture plate 22. In a center portion of the internal terminal plate 21, there is a thin-walled portion that is thinner than an outer annular portion that is connected to the positive electrode lead 17.

The insulating plate 23 is a disc-shaped member made of insulating material with an opening portion 23a in its center portion. The rupture plate 22 is arranged so as to face the internal terminal plate 21 through the insulating plate 23. A center portion of the rupture plate 22 is connected by welding or the like to the thin-walled portion in the center portion of the internal terminal plate 21 through the opening portion 23a of the insulating plate 23.

In addition, the rupture plate 22 has an easily breakable portion 22a in an intermediate portion in the radial direction. The easily breakable portion 22a is formed by a ring-shaped thin-walled portion 22b formed in part of the rupture plate 22 in the radial direction. The easily breakable portion 22a is formed when an annular groove 22c is formed in part of an inner surface (lower surface in FIG. 1) of the rupture plate 22 in the radial direction. The groove to form the easily breakable portion 22a may be formed on an outer surface (upper surface in FIG. 1) of the rupture plate 22. A vent portion 22d is formed due to a portion that is radially inside the easily breakable portion 22a of the rupture plate 22.

The sealing assembly 19 is crimped and fixed by the outer housing can 20 through the gasket 24 on the radial outside of the easily breakable portion 22a. The pressure inside the battery acts on the inside of the groove 22c of the rupture plate 22 through vent holes formed in the internal terminal plate 21 and the insulating plate 23.

When the internal pressure of the battery rises and exceeds a predetermined threshold, the easily breakable portion 22a of the rupture plate 22 breaks, and the vent portion 22d radially inside the easily breakable portion 22a moves away from the outer housing can 20.

When electrical connection is established between the internal terminal plate 21 connected to the positive electrode lead 17 and the rupture plate 22, a current path is formed from the electrode assembly 14 to the rupture plate 22. When abnormality occurs in the battery and the internal pressure rises, the internal terminal plate 21 breaks, so that the thin-walled portion of the internal terminal plate 21 is detached from an annular portion outside the thin-walled portion, and the vent portion 22d deforms so as to project to the outside of the battery. This interrupts the current path. As the internal pressure of the battery rises further, the easily breakable portion 22a breaks as described above and a gas outlet is formed.

Note that the structure of the sealing assembly 19 is not limited to the structure shown in FIG. 1. For example, the sealing assembly 19 may be configured with only the rupture plate. Alternatively, the sealing assembly 19 may have a stacked structure including two rupture plates, and may have a convex sealing assembly cap that covers the rupture plates.

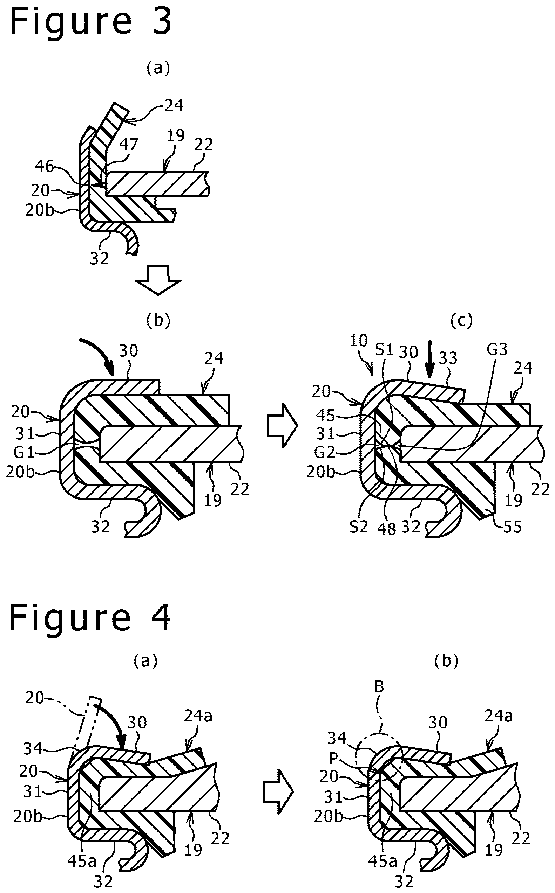

Hereinafter, with reference to FIGS. 2 and 3, detailed description is given of the configuration of the gasket 24 and a method for crimping and fixing the sealing assembly 19 to the outer housing can 20 through the gasket 24. FIG. 2 is a sectional view of the gasket 24 before assembling of the battery. As shown in FIG. 2, the gasket 24 is formed into generally an L-shape in cross section and generally in an annular shape as a whole. Specifically, the gasket 24 includes a circular plate portion 41 and a generally cylindrical tubular portion 44 that is erected from an outer circumferential edge of the plate portion 41 before assembling to the battery. The plate portion 41 has an annular body plate portion 42 and an annular thin-walled portion 43 that extends from an inner circumferential surface of the body plate portion 42 on the side of the bottom portion 20a (lower side) toward the radially inner side and that is thinner than the body plate portion. In the cylindrical battery 10, the thin-walled portion 43 constitutes a cover portion 55 (see FIG. 1) that covers a radially inner tip of the grooved portion 32. Since the thin-walled portion 43 constitutes the cover portion 55, a short circuit between the outer housing can 20 and the sealing assembly 19 is reliably prevented.

On the upper surface of the body plate portion 42 on the inner circumferential side, an annular protrusion 42a protrudes. As will be described later, when the gasket 24 is compressed in the axial direction by the tip bent portion 30 extending to the radially inner side of the outer housing can 20 and the grooved portion 32 through the rupture plate 22, the protrusion 42a is pressed against the lower surface of the rupture plate 22 and the thin-walled portion 43 is deformed downward. At that time, the thin-walled portion 43 can cover the radially inner tip of the grooved portion 32.

In addition, an easily breakable portion 46 is formed in a facing portion 45 in the tubular portion 44 of the gasket 24, the facing portion 45 facing the radially inner side of the tip tubular portion 31 of the outer housing can 20. The easily breakable portion 46 is a thin-walled portion provided by forming a notch 47 on the inner circumferential surface of the facing portion 45 over the entire circumference along the circumferential direction, the thin-walled portion being thinner in the radial direction than other portions. For example, the notch 47 is generally V-shaped in cross section or generally in the shape of a straight line extending in the radial direction in cross section. As will be described later, the easily breakable portion 46 allows easy breaking of the gasket 24 so that the gasket 24 is separated into upper and lower two portions, when the gasket 24 is arranged inside the opening portion of the outer housing can 20 and the tip portion of the outer housing can 20 is bent radially inward.

The resin that constitutes the gasket 24 may be any material that is deformable during crimping, and the type of the material is not limited. The resin constituting the gasket 24 may also be a material that allows production by injection molding. Examples of the resin used to constitute the gasket 24 may include polypropylene (PP), polybutylene terephthalate (PBT), and perfluoroalkoxyalkane (PFA).

Meanwhile, the outer housing can 20 can be fabricated, for example, in following procedures. First, the grooved portion 32 is formed by recessing part of the tubular portion 20b in the outer housing can 20 inward in the radial direction by spinning. Then, the sealing assembly 19 and the gasket 24 are arranged on the grooved portion 32 so that the gasket 24 is located between the outer housing can 20 and the sealing assembly 19.

Specifically, as shown in FIG. 3(a), while a portion of the tubular portion 20b of the outer housing can 20 that is on the tip side in relation to the grooved portion 32 extends in the axial direction, the gasket 24 is inserted to the inside of the tip side portion and is arranged on the grooved portion 32, and then the tip portion of the tubular portion 20b is slightly bent inward in the radial direction from the state where the tip portion of the tubular portion 20b extends in the axial direction. In this state, the gasket 24 is arranged adjacent to the inside of the opening portion of the outer housing can 20.

Next, as shown in FIG. 3(b), the tip portion of the tubular portion 20b of the outer housing can 20 is bent so as to face radially inward at an angle of 90 degrees or slightly greater than 90 degrees. In this way, the tip bent portion 30 and the tip tubular portion 31 are formed, the tip tubular portion 31 being provided on the side of the bottom portion 20a in the axial direction in relation to the tip bent portion 30 so as to extend in the axial direction. In this case, the outside of the easily breakable portion 46 of the gasket 24 is stretched by the tip portion of the outer housing can 20, which generates tensile stress in the easily breakable portion 46 and breaks the easily breakable portion 46. This separates the gasket 24 in the axial direction through a gap G1.

Then, from the state where the gasket 24 is separated in the axial direction through the gap G1, the gasket 24 is compressed in the axial direction through the tip bent portion 30 and an upper portion of the grooved portion 32 with the circumferential edge portion 33 of the rupture plate 22 being held inside the gasket 24 as shown in FIG. 3(c). As a result, the gasket 24 is compressed in the axial direction in a state of being held between the tip bent portion 30 and the grooved portion 32. At this time, the gap present between the separated portions of the gasket 24 becomes smaller. Accordingly, the gasket 24 is held between the tip bent portion 30 and the grooved portion 32 in the axial direction. The tip bent portion 30 is further bent downward and crimped to the circumferential edge portion 33 of the rupture plate 22, by which the cylindrical battery 10 is fabricated. The bending of the tip bent portion of the tubular portion 20b and the compression of the gasket 24 can be performed by machining.

In the state where the cylindrical battery 10 is fabricated, as shown in FIG. 3(c), the gasket 24 is arranged adjacent to the inside of the opening portion including the tip bent portion 30 and the tip tubular portion 31. At this time, in the facing portion 45 of the gasket 24 that faces the radially inner side of the tip tubular portion 31 of the outer housing can 20, a non-continuous portion 48 that is separable in the axial direction is formed. In the example shown in FIG. 3(c), facing surfaces in the gasket 24 that face in the axial direction at the non-continuous portion 48 are only partially in contact with each other, and gaps G2 and G3 are formed between the facing surfaces. Each of the gaps G2 and G3 is a notch-like space formed over the entire circumference along the circumference direction of the gasket 24. A gap may be formed only in one of a radially outer end portion and a radially inner end portion. The facing surfaces that face each other in the axial direction at the non-continuous portion 48 may be in full contact with each other. In that case, no gap is formed between the facing surfaces, though the gasket 24 is allowed to remain separable between an upper portion and a lower portion at the non-continuous portion 48, so that the non-continuous portion 48 can relieve the stress inside the gasket 24 and reduce stress concentration at the corner portion of the outer housing can 20. However, the aforementioned effects are noticeably demonstrated when the gaps are formed at the non-continuous portion 48. The facing surfaces at the non-continuous portion 48 may be completely separated from each other.

Moreover, on one or both of the facing surfaces at the non-continuous portion 48 of the gasket 24, curved surface portions S1 and S2 are formed in an arc shape in cross section.

According to the cylindrical battery 10, the non-continuous portion 48 that is separable in the axial direction is formed in the facing portion 45 of the gasket 24. Moreover, according to the method for manufacturing a cylindrical battery, the gasket 24, which is in the state of being separable in the axial direction, is compressed in the axial direction through the tip bent portion 30. As a result, when the gasket 24 is compressed by the tip portion of the outer housing can 20 during crimping the tip portion of the outer housing can 20 to the circumferential edge portion 33 of the sealing assembly 19, the stress applied from the gasket 24 to the corner portion of the outer housing can 20 can be reduced. Therefore, since the stress concentration at the corner portion of the outer housing can 20 can be reduced, the occurrence of damage in the corner portion can be suppressed. Moreover, the aforementioned effects are noticeably demonstrated when the gaps are formed between the facing surfaces at the non-continuous portion 48.

In addition, the facing portion 45 where the gaps G2 and G3 are formed in the gasket 24 is a portion where tensile stress of the gasket 24 tends to occur due to the bending of the tip portion of the outer housing can 20. For this reason, when the easily breakable portion 46 is provided in the facing portion 45, the easily breakable portion 46 is easily broken by the tensile stress. The easily breakable portion 46 is preferably provided in a portion of the facing portion 45 of the gasket 24 that faces the outer circumferential surface of the sealing assembly 19.

The gasket 24 also has the curved surface portions S1 and S2 in an arc shape in cross section, which are formed at least one of the facing surfaces that face each other in a portion of the gasket 24 that is separated in the axial direction through the gaps G2 and G3. This makes it easier to form the gaps G2 and G3 at the non-continuous portion 48 in the gasket 24.

Moreover, in the method for manufacturing a cylindrical battery, before the gasket 24 is compressed in the axial direction, the easily breakable portion 46 is formed in advance in the facing portion 45 of the gasket 24 that faces the tip tubular portion 31. Then, breaking the easily breakable portion 46 by bending the tip portion of the outer housing can 20 causes the gasket 24 to be compressed in the axial direction through the tip bent portion 30 from the state where the gasket 24 is separated in the axial direction through the gap G1. This makes it possible to treat the gasket 24 as a single non-separable component before the gasket 24 is assembled to the battery, so that manufacturing workability can be enhanced.

FIG. 4 is an enlarged sectional view corresponding to the portion A in FIG. 1 to show the occurrence of damage in an outer housing can 20 of a cylindrical battery of a comparative example, when the cylindrical battery is used under severe conditions after a tip portion of the outer housing can 20 is bent and a gasket 24a is further compressed in the axial direction after the gasket 24a is assembled to the outer housing can 20 of the cylindrical battery. In the configuration of the comparative example, in a facing portion 45a of the gasket 24a that faces the radially inner side of a tip tubular portion 31 of the outer housing can 20, a non-continuous portion that is separable in the axial direction through the gap is not formed. In such a comparative example, consider the case where the tip portion of the outer housing can 20 is bent and crimped to the sealing assembly 19 through the gasket 24a. In this case, the stress received from the gasket 24a tends to concentrate at, for example, a position indicated by an arrow P in FIG. 4(b) in a corner portion 34 of the outer housing can 20. Accordingly, when the cylindrical battery 10 is used under severe conditions, such as being exposed to high vibration, damage may occur in a portion of the corner portion 34 of the outer housing can 20 indicated by an alternate long and short dash line B in FIG. 4(b), for example. According to the embodiment in FIGS. 1 to 3, it is possible to reduce the stress concentration at the corner portion of the outer housing can, and therefore such inconvenience can be prevented.

In the configuration shown in FIGS. 1 to 3, the easily breakable portion 46 is provided in the facing portion 45 by forming the notch 47 on the inner circumferential surface of the facing portion 45 in the gasket 24. On the other hand, the easily breakable portion may be provided in the facing portion by forming a notch generally in a V shape or other shapes in cross section on the outer circumferential surface of the facing portion in the gasket.

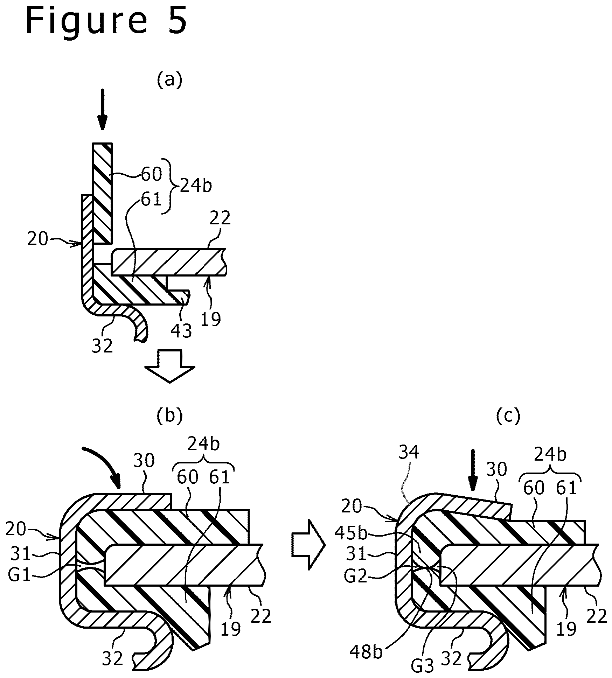

FIG. 5 is a view corresponding to FIG. 3 in a cylindrical battery in another example of the embodiment. In the configuration of this example, an easily breakable portion is not provided in a gasket 24b in the state before the gasket 24b is assembled to the cylindrical battery. Instead, the gasket 24b is totally separated in advance into two portions, an upper portion 60 and a lower portion 61, in the state before the gasket 24b is assembled to the cylindrical battery. For example, the lower portion 61 has a shape in which the plate portion 41 and a root end of the tubular portion 44 of the gasket 24 shown in FIG. 2 are integrally provided. The upper portion 60 is the same shape as the gasket 24 shown in FIG. 2, except for the root end of the tubular portion 44 and the plate portion 41. In the case of performing crimping of the outer housing can 20, the lower portion 61 of the gasket 24b is inserted to the inside of the tip tubular portion 31 of the outer housing can 20, and then the rupture plate 22 is laid on the lower portion 61 as shown in FIG. 5(a).

Then, from the state where the upper portion of the gasket 24b is inserted to the inside of the tubular portion 20b of the outer housing can 20, the tip portion of the outer housing can 20 is bent greater than or equal to 90 degrees inward in the radial direction to form the tip bent portion 30 as shown in FIG. 5(b). At this time, the gap G1 can be formed between the upper portion 60 and the lower portion 1 by deforming the upper portion 60 so as to be extruded radially inward by a portion bent at the tip portion of the outer housing can 20. It is also possible to bend the tip portion of the outer housing can 20 radially inward while lifting the upper portion 60 upward to form the gap G1. Then, as shown in FIG. 5(c), the gasket 24b is compressed in the axial direction by the tip bent portion 30 and the grooved portion 32 through the rupture plate 22.

In the cylindrical battery using the gasket 24b in such a different example, a non-continuous portion 48b that is separable in the axial direction can be formed in a facing portion 45b of the gasket 24b that faces the radially inner side of the tip tubular portion 31 of the outer housing can 20 as shown in FIG. 5(c). As a result, since the non-continuous portion 48b relieves the stress of the gasket 24b, the stress applied from the gasket 24b to the corner portion 34 of the outer housing can 20 can be reduced. This makes it possible to reduce the stress concentration at the corner portion 34. In this example, other configurational aspects and effects are similar to those in FIGS. 1 to 3.

### REFERENCE SIGNS LIST

10 Cylindrical battery, 11 Positive electrode, 12 Negative electrode, 13 Separator, 14 Electrode assembly, 15, 16, 23 Insulating plate, 17 Positive electrode lead, 18 Negative electrode lead, 19 Sealing assembly, 20 Outer housing can, 20a Bottom portion, 20b Cylinder part, 21 Internal terminal plate, 22 Rupture plate, 22a Easily breakable portion, 22b Thin-walled portion, 22C Groove, 22d Vent portion, 23a Opening portion, 24, 24a, 24b Gasket, 30 Tip bent portion, 31 Tip tubular portion, 32 Grooved portion, 33 Circumferential edge portion, 34 Corner portion, 41 Plate portion, 42 Body plate portion, 42a Protrusion, 43 Thin-walled portion, 44 Tubular portion, 45, 45a, 45b Facing portion, 46 Easily breakable portion, 47 Notch, 48, 48b Non-continuous portion, 55 Cover portion, 60 Upper portion, 61 Lower portion

## Claims

1. A cylindrical battery, comprising:
an electrode assembly having a positive electrode and a negative electrode wound through a separator;
a bottomed cylindrical outer housing can that houses the electrode assembly; and
a sealing assembly that is crimped and fixed to an opening portion of the outer housing can through a gasket, wherein
the outer housing can includes a tip bent portion that is bent so as to extend inward in a radial direction and a tip tubular portion extending in an axial direction in the opening portion adjacent to the gasket, and
the gasket has a non-continuous portion that is separable in the axial direction in a facing portion that faces a radially inner side of the tip tubular portion.

2. The cylindrical battery according to claim 1, wherein
the gasket has the non-continuous portion in a portion of the facing portion that faces an outer circumferential surface of the sealing assembly.

3. The cylindrical battery according to claim 1, wherein
the gasket has a gap formed between facing surfaces that axially face each other in the non-continuous portion.

4. The cylindrical battery according to claim 1, wherein
the gasket has a curved surface portion having an arc-shaped cross section formed at least on one of the facing surfaces that axially face each other in the non-continuous portion.

5. The cylindrical battery according to claim 1, wherein
the outer housing can comprises a grooved portion formed to project radially inward on a bottom portion side in the axial direction in relation to the tip tubular portion, and
the gasket is held between the tip bent portion and the grooved portion in the axial direction.

6. A method for manufacturing a cylindrical battery, the cylindrical battery comprising an electrode assembly having a positive electrode and a negative electrode wound through a separator, a bottomed cylindrical outer housing can that houses the electrode assembly, and a sealing assembly that is crimped and fixed to an opening portion of the outer housing can through a gasket, the method comprising:
arranging the gasket adjacent to inside of the opening portion of the outer housing can and bending a tip portion of the outer housing can greater than or equal to 90 degrees from a state of extending in an axial direction to a state of facing radially inward to form a tip bent portion and a tip tubular portion that is provided on a bottom portion side in relation to the tip bent portion and that extends in the axial direction; and
compressing the gasket in the axial direction through the tip bent portion from a state where the gasket is separated in the axial direction through a gap in a facing portion facing a radially inner side of the tip tubular portion.

7. The method for manufacturing a cylindrical battery according to claim 6, wherein
before the gasket is compressed in the axial direction, an easily breakable portion is formed in advance in the facing portion of the gasket, and
breaking the easily breakable portion by bending the tip portion of the outer housing can causes the gasket to be compressed in the axial direction through the tip bent portion from the state where the gasket is separated in the axial direction through the gap.

8. The method for manufacturing a cylindrical battery according to claim 7, wherein the easily breakable portion is formed in a portion of the facing portion facing an outer circumferential surface of the sealing assembly.

9. The method for manufacturing a cylindrical battery according to claim 6, wherein
the outer housing can comprises a grooved portion formed to project radially inward on the bottom portion side in the axial direction in relation to the tip tubular portion, and
the gasket is compressed in the axial direction so as to be held between the tip bent portion and the grooved portion.
